# EUROPEAN PATENT SPECIFICATION

(11) **EP 1 695 602 B1**
(45) Date of publication and mention of the grant of the patent: **09.07.2008**
(21) Application number: 06004042.5
(22) Date of filing: 28.02.2006
(51) Int. Cl.: A01B 49/04, A01B 49/06, A01B 49/02

(54) **Agricultural machine for incorportating liquid substances into soil**
Landmaschine zur Einarbeitung von flüssigen Substanzen in den Boden
Machine agricole pour incorporer des substances liquides dans le sol

(30) Priority: 28.02.2005 EP 05004277
(43) Date of publication of application: 30.08.2006
(73) Proprietor: ROTER ITALIA S.r.l., 37056 Bionde Di Salizzole (VR) (IT)
(72) Inventor: Forigo, Sandro, 46035 Ostiglia (MN) (IT)
(74) Representative: Fisauli, Beatrice A. M.

(56) References cited:
- EP-A- 1 477 610
- BE-A6- 1 003 140
- FR-A- 2 108 645
- GB-A- 1 136 145
- GB-A- 1 313 744
- GB-A- 2 021 373
- US-A- 3 542 133
- US-A- 4 211 175

## Description

This invention relates to a machine designed to perform a complete spray treatment on agricultural land by incorporating in the soil liquid substances such as plant protection products, weedkillers, fertilisers and soil conditioners. The machine according to the invention is suitable in particular for treatments, such as fumigation of agricultural land, which involve incorporating into the soil liquid substances that subsequently evaporate and perform their function in the gaseous state. Said substances require the creation of a barrier layer, obtained by compacting the topsoil immediately after spraying, which constitutes an obstacle to the dispersion of the vapours in the atmosphere so that said vapours remain in the soil for as long as possible. Fumigation treatment was traditionally performed in three stages, using irrigation bars or weedkiller sprayers, or directly injecting the fumigants into the soil by hand. The first operation involved tilling of the soil with placing units (also known as stone-burying machines). This was followed by spraying of the soil, which had to be followed very rapidly by compacting of the soil, usually by rolling, so as to create if not a barrier, at least an obstacle to the gases that develop from said fumigants.

Said three stages involved very long working times. In addition, spraying was not particularly uniform, especially when performed with weedkiller sprayers, and above all when the fumigants were directly injected into the soil by hand. Uneven spraying required greater use of fumigants.

Finally the soil was compacted at a later stage, with the result that the gas barrier was created after spraying. As a result, part of said gas was dispersed directly into the atmosphere without performing its function, with the result that a larger amount of fumigants needed to be used.

Patent GB A 1136145 discloses a stone-burying machine designed to providing an ideal seed bed with the stones covered by a layer of finesoil.

It was not to be neglect the fact that the personnel who performed the work were obliged to remain for a long time in the areas in which said fumigants, which are harmful to the health, were sprayed, and to pass through areas where said fumigants had already begun to evaporate, and in the absence of a barrier that prevented them from being emitted into the atmosphere. In practice, said fumigants were sprayed onto the soil in liquid form, and the operator was obliged to pass through the sprayed area again when the evaporation process was well under way.

Patent application WO 01/28323, filed by Calliope (FR), describes a machine designed to diffuse liquid substances in the soil. Said substances are injected into the soil through pipes integral with a plurality of ploughshares which advance in the soil. The machine operates immediately after the soil is compacted with a compacting roller.

A machine like the one described solves the problem of introducing the liquid product into the soil, but has the drawback of not distributing said product evenly, because it is more concentrated at the furrows created by the ploughshares, with the result that a large amount of product is required to produce the same level of efficacy.

Patent FR 2,108,645, filed by Great Lakes Chemical Corporation (USA), describes a machine designed to spray soil with liquid substances and mix said substances with the soil by means of a blade installed downstream of the spraying means.

The machine described solves the problem of introducing the product into the soil and improves placing, but the product is sprayed onto the compacted soil, which is only broken up later. Part of the product consequently tends to evaporate before being mixed with the soil, which means that once again, a larger amount is required to produce the same level of efficacy. Moreover, the quantity of product which evaporates is potentially harmful to the operator. Finally, according to the prior art it is impossible to measure the product to be sprayed adequately, and adapt its quantity to the actual needs of the soil, which may vary from place to place on the same plot, depending on the number of weeds present.

The purpose of this invention is to eliminate said drawbacks by means of a machine as claimed in claim 1 . Said machine is designed to perform spraying and mixing operations simultaneously, and is able to complete the operation by compacting the soil in a single pass.

The spraying and mixing operations can be performed simultaneously because the spraying, crushing and soil mixing means are all located inside a guard, which has the function of containing the soil projected by said crushing means. In this way almost all the product sprayed is mixed instantly with the soil, and evaporation of the product before its incorporation in the soil is practically eliminated.

According to a preferred form of embodiment, said crushing means comprise a placement unit which, unlike a tilling machine, offers some advantages regarding mixing of the liquid substance with the soil; it also increases the uniformity of dispersion of the substance and creates a more efficient barrier, thus preventing the dispersion of the evaporated substance into the environment.

A placement unit substantially consists of a blade that rotates in the opposite direction to the wheels of the tractor that pulls it. Said blade crushes the soil and projects it against a grid which acts as a sieve, stopping stones and clods of earth larger than two centimetres, which immediately fall downstream of the blade, and allowing the passage of finer soil, which then falls on the stones and buries them.

The most evident result of this design of the machine is that the simultaneous performance of spraying and mixing operations produces a significant reduction in the consumption of the fumigants used, in view of their lower evaporation and more uniform placing, and consequently a great reduction in exposure of the operator to the action of said fumigants.

Soil compacting immediately after spraying, which creates a barrier to the exit of gases, almost entirely prevents dispersion while the operator is in the place sprayed; moreover, the operator is not obliged to pass over the sprayed soil again.

In practice, considerable savings of product can be achieved: up to 25-30%.

As the fumigants used are still dispersed into the environment after performing their function, lower fumigant consumption obviously reduces their environmental impact.

The invention will now be described according to a preferred form of embodiment, by reference to the annexed figures, wherein:
- figures 1 (a, b) are the side view and front view respectively of a machine not falling under the scope of the invention;
- figure 2 is an enlargement of the side view;
- figures 3 (a, b) show the support and protection unit of the nozzles designed to spray the liquid soil-treatment substances;
- figure 4 shows a device for regulating the output rate of the fluid from the nozzles;
- figure 5 shows a detail of the soil compacting roller;
- figure 6 shows an additional nozzle for spraying the liquid soil-treatment substances;
- figure 7 shows a pump designed to deliver the fluid to be sprayed to the nozzles;
- figure 8 shows a computerised control unit.

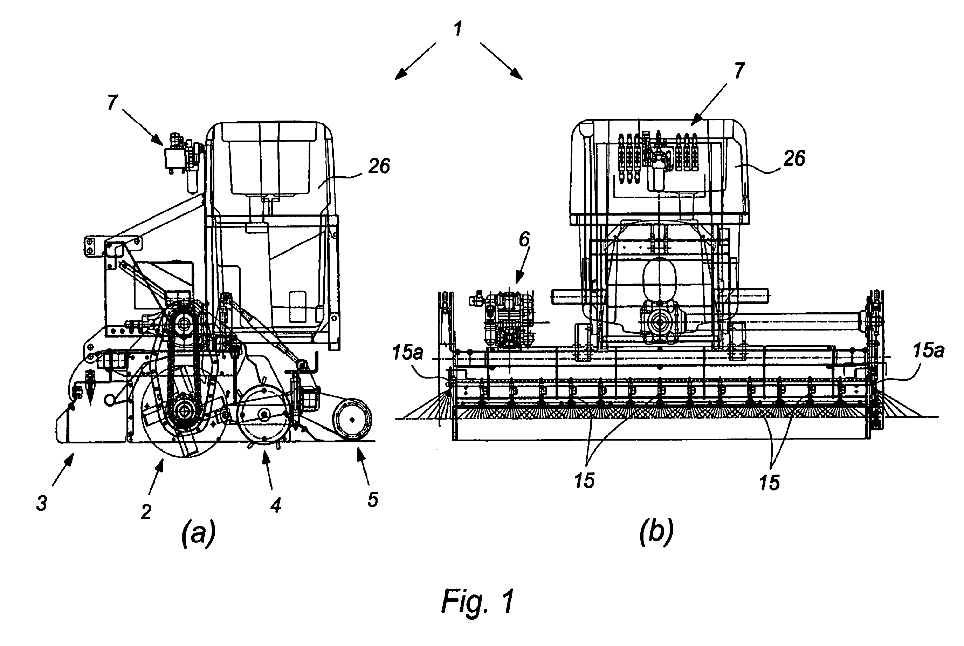

In fig. 1, number (1) indicates an embodiment of a machine not falling under the scope of the invention, which consists of a set of parts designed to perform the functions of tilling, stones and clods burying, spraying and compacting of the soil, which said set of parts is rendered operational by connection to the power take-off of a tractor after the machine has been coupled to the three-point linkage, as in the case of the vast majority of agricultural machines.

Machine (1) according to the invention is shown in a side view (fig. 1a) and a front view (fig. 1b). Said machine (1) substantially comprises means (2) for tilling the soil and burying stones and clods of earth, means (3) for spraying said soil, means (4) for detecting the rate of advance of the machine, means (5) for compacting the soil, means (6) for delivering fluid to said spraying means (3), and means (7) for computerised control of the operation of said machine (1) according to the invention.

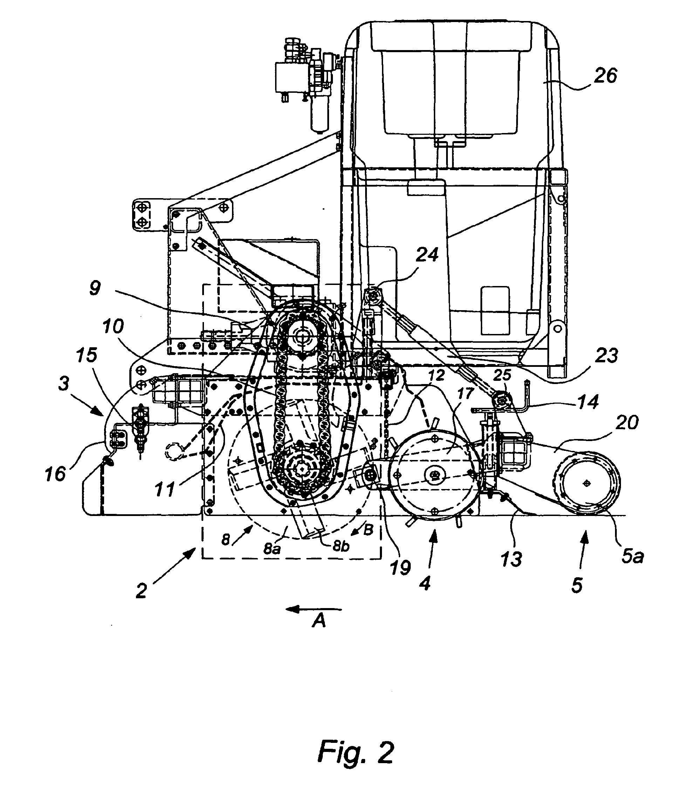

Said soil tilling and stones and clods burying means (2) shown in greater detail in fig. 2, comprise a placement unit of known type (8) (namely a rotary cultivator with a horizontal axis, with the tools rotating in the opposite direction to the tractor wheels), equipped with a plurality of flanges (8a) to which mattocks (8b) with an angular profile are fitted.

While the machine, pulled by the tractor, advances in the direction indicated by arrow (A), blade (8) rotates in the direction indicated by arrow (B) and projects the broken-up soil against a guard (11), which preferably has a double base so that it more effectively withstands shocks from the stones thrown up by blade (8).

Guard (11) and the rotation of blade (8) guide the soil towards a rear grid (12), preferably fitted to elastic supports which more effectively absorb shocks from the stones. Grid (12) is also subjected to vibration so that it remains clean and clear, even when operating on damp soil.

Grid (12) is preferably the rapid extraction type so that the distance between the teeth of said grid can easily be changed in order to obtain different sieving effects, depending on the characteristics of the soil.

A levelling bar (13) is positioned behind the grid, in the direction of travel of the machine, the height of which said bar can be adjusted by manually regulating two side handles (14). Said levelling bar levels the soil raised and broken up by blade (8).

Soil spraying means (3) (figs. 1, 2 and 3) are positioned in front of blade (8). Said means comprise a plurality of nozzles (15) aligned along a horizontal axis perpendicular to the direction of travel, which said nozzles (15) are protected by a guard (16) that contains them.

As nozzles (15) are positioned in front of blade (8), they spray the liquid product onto soil which is still compact, but is immediately broken up and mixed by blade (8). This operation is facilitated by the fact that the nozzles, are contained in guard (16) which, in turn, prevents the soil crushed by blade (8) from being scattered around and aids mixing of said soil with the sprayed product. Although the operation takes place inside the guard, the small pieces of crushed soil which are raised by the blade are sprayed, fall on the ground and are distributed all over the strip of land in question, and then mixed and buried by the blade tools.

The operations can therefore be said to be simultaneous for all practical purposes.

In order to obtain said simultaneous operation, said nozzles (15) are positioned at a distance D ranging between approximately 50 and 500 mm from the external trajectory of blade (8) and at a height h ranging between approximately 200 and 450 mm from ground level, with the machine above ground when at rest. The choice depends on the type of soil and the dimensions of the machine.

According to a first preferred embodiment of the invention, said nozzles (15) can be positioned inside guard (16) so as to spray horizontally towards blade (8).

According to a first preferred variation, said nozzles (15) can be positioned inside guard (16) above blade (8) and spray against said blade.

According to a second preferred variation, said nozzles (15) can be positioned, inside guard (16), between blade (8) and rear grid (12), directly spraying the soil already tilled. In this case the soil is very porous, and consequently absorbs the sprayed product very easily.

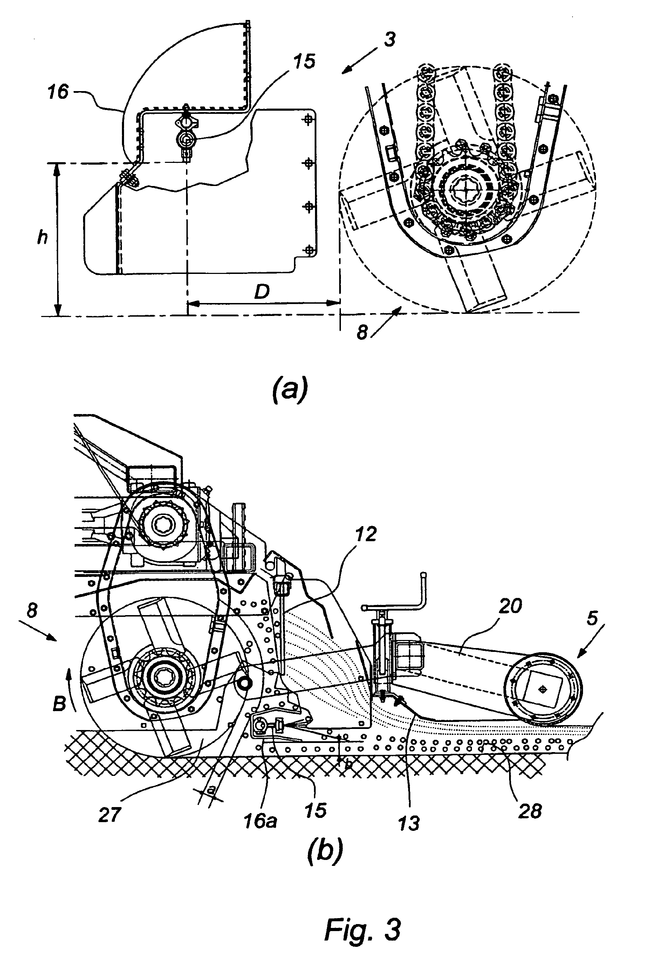

According to a third preferred variation illustrated in fig. 3b, nozzles (15), preferably protected against projected stones and soil by a fairing (16a), are positioned in a very low position downstream of blade (8). Said nozzles (15) are positioned at a lower level than the ground before tilling, being inserted in furrow (27) made by blade (8). Fairing (16a) which encloses nozzles (15) must be as close as possible to blade (8) and the bottom (28) of furrow (27).

In practice, in order to avoid interference with blade (8), the axis of which undergoes considerable curvatures during tilling, a minimum distance a of 50 mm from the external trajectory of tools (8a) of blade (8) can be indicated. Similarly, a minimum distance b of 50 ÷ 80 mm can be indicated from fairing (16a) to bottom (28) of furrow (27).

Alternatively, nozzles (15) can be positioned, always downstream of blade (8), in the flow of the stones and clods of soil that fall due to the, sieving effect of the grid (12). In this way the liquid substances are still incorporated in the permeable lower layer, whereas the upper layer is hardly wet at all by the substance sprayed.

As a result of the combined effect of blade (8) and grid (12), a stone-burying machine causes stones and clods to be buried in the soil, and they are deposited on the bottom (28) of furrow (27) created by blade (8). In this way they form a permeable layer, because it is full of clods and stones, topped by a much less permeable layer, which consists almost entirely of fine soil. Said permeability of the lower layer aids the transverse movement of the fumes generated by the liquid substances sprayed, which are sprinkled even more evenly over the soil, whereas the layer above, consisting of fine soil, once compacted, will form a very effective barrier to the exit of vapours.

A configuration in accordance with said third preferred variation increases the advantages of using a placement unit such as a soil crushing machine, because by spraying directly into the stony layer, it only disperses the fumigant into said layer, while the compacted upper part will contain virtually no fumigant. This means that the fumigant can perform its action in depth, virtually eliminating the dispersion of fumes into the environment in the early stages of the treatment.

Said nozzles (15) can be replaced with other means suitable to spray the soil, such as a perforated bar (not illustrated), placed in the same positions. In such case, the liquid can obviously only be sprayed vertically.

Whatever the method and position in which the product is sprayed, as said spraying takes place inside guard (16), while blade (8) is rotating, the crushed soil projected by the blade begins to mix with the product sprayed at exactly the same time as said product exits from nozzles (15) or from the perforated bar.

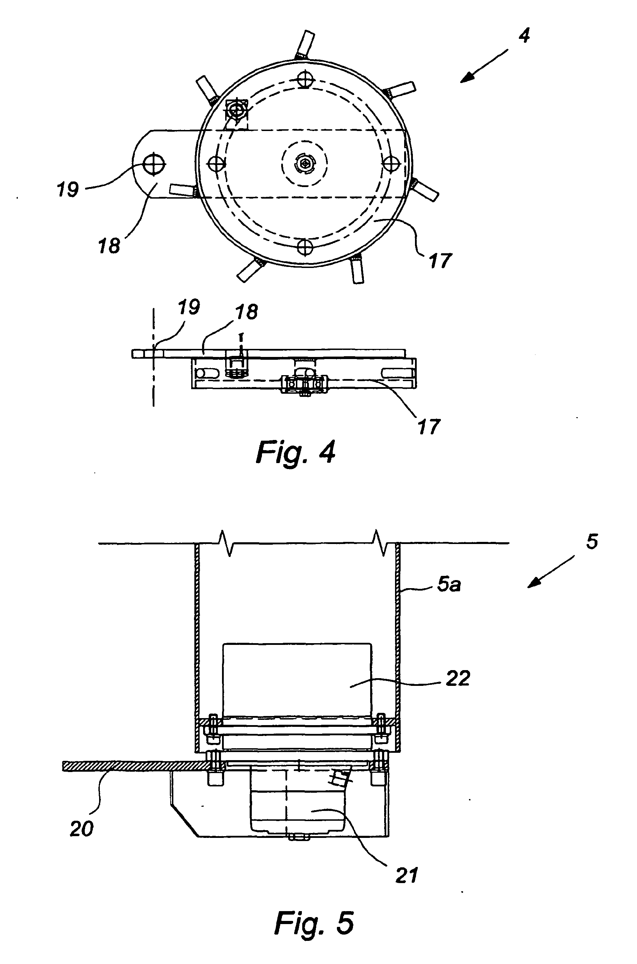

Means (4) which detect the rate of advance of the machine are positioned on the side of the machine. Said means (4) comprise an idler gear (17) (figs. 2 and 4), fitted to an arm (18) which oscillates in relation to an axis (19) parallel to the ground and perpendicular to the direction of advance of the machine. Thus wheel (17) is caused to rotate by the advance of the machine, and is able to measure its rate of advance by means of a device of known type such as an encoder or a tachogenerator which is designed to emit signals according to the rotation speed of said wheel (17), said signals being interpreted by said means (7) for computerised control of the operation of said machine (1).

The operation of the flow rate regulation system of the liquid substance to be sprayed is described below.

A smooth compacting roller (5a) (figs. 2 and 5), mounted in such a way as to oscillate on two arms (20) which have their fulcrum on said horizontal axis (19), is positioned downstream of said levelling bar (13). Roller (5a) completes the levelling action and compresses the soil, the compression action being preferably boosted by the rotation of said roller (5a), which is preferably driven by a hydraulic unit comprising an orbital motor (21) with epicyclic gear train (22) (fig. 5). The direction of rotation of roller (5a) is equal to that of the tractor wheel during advance.

Roller (5a), which preferably has a working width greater than that of the blade, can traverse on both sides, projecting from the machine by approximately 200 mm, so as to eliminate the ridge that tends to form between two adjacent passes without constituting an obstacle to passages close to greenhouse pillars.

The working depth is regulated by adjusting the three-point linkage of the tractor and the position of rear roller (5a), which is regulated by adjusting said two oscillating arms (20), which are easily accessed by the operator, who performs the regulation by adjusting a sleeve (23) internally threaded with two opposite threads, which is positioned between a fixed point (24) of the chassis of the machine and a point (25) integral with said oscillating arms (20) that support said roller (5a).

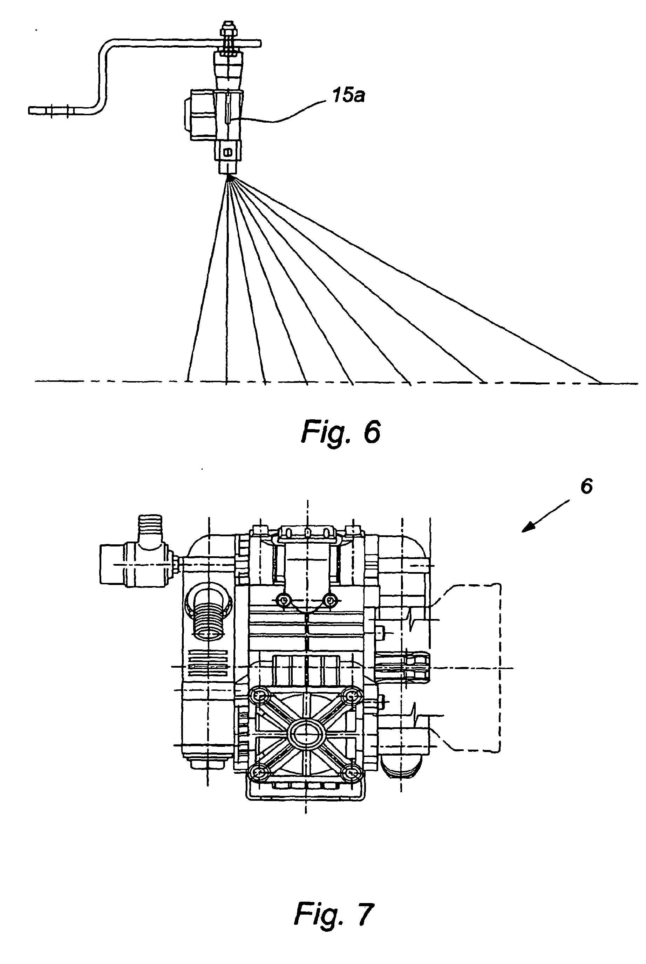

The machine according to the invention can be advantageously fitted with a pair of spray nozzles (15a) (fig. 6) which are aligned with said nozzles (15) and project by a few centimetres from the machine to increase its range of action and ensure complete coverage of the soil, although said nozzles (15a) obviously spray outside the mixing zone and are therefore less efficient.

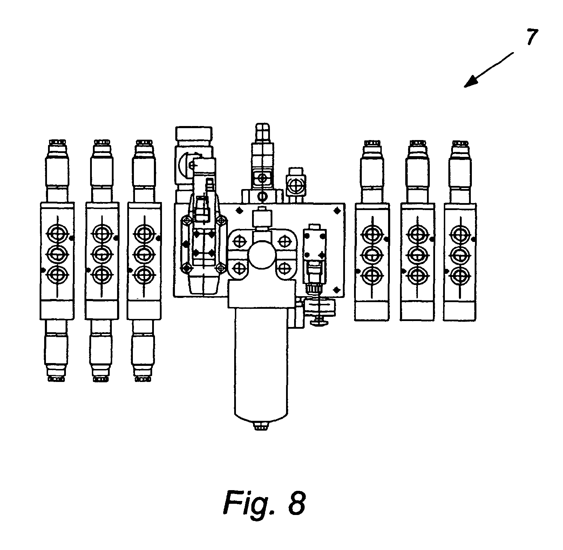

The liquid to be sprayed, contained in a tank (26) made, for example, of polyethylene obtained by rotational moulding, is conveyed under pressure to nozzles (15) and (15a) by said means (6), constituted by a pump such as a diaphragm pump. Said pump (fig. 7), which has a flow rate of up to 100 - 150 l/min and can exert a pressure of 15 bars, required to obtain suitable pulverisation of the fluid jet, is controlled by said means (7) designed for computerised control of the operation of the machine (fig. 8).

It is advisable for the spraying pressure to be high enough to pulverise the product sufficiently, because pulverisation aids mixing with the soil.

Said means (7) for the computerised control of the operation of the machine comprise a flowmeter and a computer which, being connected to said device for measuring the rotation speed of said wheel (17), is able to determine the pressure and flow rate parameters of the pump to optimise the spraying process.

The flowmeter, for example a magnetic flowmeter, which is able to directly detect the flow rate of the pump without deducting it from pressure measurements, enables the quantity of liquid distributed during treatment to be controlled. Said quantity can be varied by the operator using regulation buttons (not illustrated) which increase or reduce the dose.

In other words, the operator can concentrate on driving the tractor, while machine (1) according to the invention performs all the operations, being able to regulate the quantity of product sprayed automatically. depending on the speed, and to stop spraying if the tractor stops for any reason.

Moreover, by operating the regulation buttons (not illustrated), the operator can vary the flow rate of the liquid substance according to the areas to be sprayed. In practice, the distribution of a reduced dose will be set, and this dose will be increased, in problem areas only, by pressing certain buttons. This enables the distribution of high doses to be limited to the areas with the greatest presence of weeds, or varieties of weeds which require higher doses.

According to a preferred embodiment, the flowmeter detects when the spraying machine is unable to adapt the flow rate to the values required by the dose set and/or subsequently modified during the treatment. In this case the operator can increase or reduce the rate of advance of the tractor during distribution. In a subsequent distribution, nozzles (15) could be replaced with others characterised by a combination of flow rate and pressure which is better suited to the distribution to be performed.

The above description clearly demonstrates that spraying the product onto the blade or in its immediate vicinity while keeping all the devices inside a guard produces excellent mixing, and consequently high uniformity of dispersion of the product; which in practice means that less product needs to be used to produce the same level of efficacy.

In the case of spraying in the furrow created by blade (8), the liquid substance is incorporated at a greater depth, while the soil surface remains virtually unsprayed. In this way the efficacy of the barrier layer increases, and greater savings of product can be made without affecting its efficacy.

The flow rate regulation system also provides considerable reductions in consumption, because it allows the dose to be selectively increased only in the necessary areas, unlike the systems according to the prior art, which require a dose calibrated to the needs of areas which are particularly infested with weeds, and maintain the same dose in other areas too.

As the machine according to the invention enables the operation to be completed in a single pass, the operator does not need to pass over the sprayed ground again to compact it, thus safeguarding the operator's health, as well as reducing environmental impact and costs, due to the smaller amount of potentially toxic substances used.

## Claims

1. Machine for the treatment of agricultural land by spraying and incorporation in the soil of liquid substances such as plant protection products, weedkillers, fertilisers and soil conditioners, of the type comprising:
• first means (3) designed to spray said soil with said liquid substances;
• second means (8) designed to break up said soil and mix it with said sprayed liquid substances;
• third means (5) designed to compact said sprayed soil, creating a compact crust which prevents the exit of the fumes generated by the evaporation of said liquid substances sprayed by said first means (3);
wherein:
• said second means (8), designed to break up said soil and mix it with said sprayed liquid substances, includes a stone-burying machine;
• said first means (3), designed to spray said soil with said liquid substances, are positioned downstream of said second means (8) designed to break up said soil and mix it with said sprayed liquid substances, and are directly spraying the soil already tilled;
the crushed soil, projected by the blade beginning to mix with the product sprayed at exactly the same time as said product exits from said first means (3) designed to spray said soil with said liquid substances.

2. Machine as claimed claims 1, **characterised in that** said first means (3), designed to spray the soil with said liquid substances, are positioned between said second means (8), designed to break up the soil, and a rear grid (12) against which said crushed soil is projected.

3. Machine as claimed in claims 1, **characterised in that** said first means (3), designed to spray said soil with said liquid substances, are positioned downstream of said second means (8), designed to break up said soil and mix it with said sprayed liquid substances, in the flow of stones and clods of soil that fall due to the sieving effect of a grid (12) positioned downstream of said means (8).

4. Machine as claimed in claim 3, **characterised in that** said first means (3), designed to spray the soil with said liquid substances, are positioned at a height between the bottom (28) of a furrow (27) dug by said second means (8), designed to break up the soil and mix it with said sprayed liquids, and the level of the untreated soil, when said machine (1) is in the operating position.

5. Machine as claimed in claim 4, **characterised in that** said first means (3), designed to spray the soil with said liquid substances, are positioned at a distance of between 50 and 80 mm from the bottom (28) of said furrow (27).

6. Machine as claimed in claim 4, **characterised in that** said first means (3), designed to spray the soil with said liquid substances, are positioned at a distance of approximately 50 mm from the external trajectory of the tools of said second means (8) designed to break up said soil and mix it with said sprayed liquid substances.

7. Machine as claimed in claim 2 to 4, **characterised in that** said first means (3), designed to spray the soil with said liquid substances, are positioned inside a fairing (16a) designed to protect them against projected stones and soil.

8. Machine as claimed in at least one of the claims 1 to 7, **characterised in that** said first means (3), designed to spray the soil with said liquid substances, comprises a plurality of nozzle (15).

9. Machine as claimed in at least one of the claims 1 to 7, **characterised in that** said first means (3), designed to spray the soil with said liquid substances, comprises a perforated bar.

## Patentansprüche

1. Maschine zur Aufbereitung von Agrarland durch Versprühen und Einfügen in den Boden flüssiger Substanzen wie Pflanzenschutzmittel, Unkrautvertilgungsmittel, Düngemittel und Bodenverbesserungsmittel, vom Typ, der umfasst:
• erste Mittel (3), vorgesehen, um besagten Boden mit besagten flüssigen Substanzen zu besprühen;
• ein zweites Mittel (8), vorgesehen, um besagten Boden aufzubrechen und ihn mit besagten versprühten flüssigen Substanzen zu vermischen;
• ein drittes Mittel (5), das vorgesehen ist, um besagten besprühten Boden zu verdichten, so dass eine feste Kruste entsteht, die das Ausströmen der Gase verhindert, die durch die Verdampfung besagter flüssiger Substanzen, die durch besagte erste Mittel besprüht wurden, erzeugt werden (3);
wobei:
• besagtes zweites Mittel (8), das vorgesehen ist, um besagten Boden aufzubrechen und ihn mit besagten versprühten flüssigen Substanzen zu vermischen, eine Umkehrfräse umfasst;
• besagte erste Mittel (3), die vorgesehen sind, um besagten Boden mit besagten flüssigen Substanzen zu besprühen, stromabwärts des besagten zweiten Mittels (8), das vorgesehen ist, um besagten Boden aufzubrechen und ihn mit besagten versprühten flüssigen Substanzen zu vermischen, gelegen sind und den bereits bestellten Boden direkt besprühen;
der durch das Messer hochgeworfene zerkleinerte Boden beginnt, sich mit dem Produkt zu vermischen, das ganz genau in dem Augenblick versprüht wird, wenn besagtes Produkt aus besagten ersten Mitteln (3), die vorgesehen sind, um besagten Boden mit besagten flüssigen Substanzen zu besprühen, herauskommt.

2. Maschine nach Anspruch 1, **gekennzeichnet dadurch, dass** besagte erste Mittel (3), die vorgesehen sind, um besagten Boden mit besagten flüssigen Substanzen zu besprühen, zwischen dem besagten zweiten Mittel (8), das vorgesehen ist, um den Boden aufzubrechen, und einem hinteren Gitter (12) gelegen sind, gegen welches besagter zerkleinerter Boden geworfen wird.

3. Maschine nach Anspruch 1, **gekennzeichnet dadurch, dass** besagte erste Mittel (3), die vorgesehen sind, um den Boden mit den besagten flüssigen Substanzen zu besprühen, stromabwärts des besagten zweiten Mittels (8), das vorgesehen ist, um besagten Boden aufzubrechen und ihn mit besagten versprühten flüssigen Substanzen zu vermischen, im Umlauf der Steine und Erdklumpen gelegen sind, die durch den Siebeffekt eines stromabwärts des besagten Mittels (8) gelegenen Gitters (12) herunterfallen.

4. Maschine nach Anspruch 3, **gekennzeichnet dadurch, dass** besagte erste Mittel (3), die vorgesehen sind, um den Boden mit besagten flüssigen Substanzen zu besprühen, auf einer Höhe liegen zwischen dem Tiefpunkt (28) einer Furche (27), die vom besagten zweiten Mittel (8), das vorgesehen ist, um den Boden aufzubrechen und ihn mit besagten versprühten Flüssigkeiten zu vermischen, gegraben wird, und dem Niveau des unbehandelten Bodens, wenn sich besagte Maschine (1) in Arbeitslage befindet.

5. Maschine nach Anspruch 4, **gekennzeichnet dadurch, dass** besagte erste Mittel (3), die vorgesehen sind, um den Boden mit besagten flüssigen Substanzen zu besprühen, in einer Entfernung zwischen 50 und 80 mm vom Tiefpunkt (28) besagter Furche (27) gelegen sind.

6. Maschine nach Anspruch 4, **gekennzeichnet dadurch, dass** besagte erste Mittel (3), die vorgesehen sind, um den Boden mit besagten flüssigen Substanzen zu besprühen, in einer Entfernung von etwa 50 mm von der Außenbahn der Werkzeuge des besagten zweiten Mittels (8) liegen, das vorgesehen ist, um den besagten Boden aufzubrechen und ihn mit den besagten versprühten flüssigen Substanzen zu vermischen.

7. Maschine nach Anspruch 2 bis 4, **gekennzeichnet dadurch**, das besagte erste Mittel (3), die vorgesehen sind, um den Boden mit besagten flüssigen Substanzen zu besprühen, in einer Verschalung (16a) liegen, die dazu vorgesehen ist, sie gegen herausragende Steine und Erde zu schützen.

8. Maschine nach zumindest einem der Ansprüche 1 bis 7, **gekennzeichnet dadurch, dass** besagtes erstes Mittel (3), das vorgesehen ist, um den Boden mit besagten flüssigen Substanzen zu besprühen, eine Vielzahl an Düsen (15) umfasst.

9. Maschine nach zumindest einem der Ansprüche 1 bis 7, **gekennzeichnet dadurch, dass** besagtes erstes Mittel (3), das vorgesehen ist, um den Boden mit besagten flüssigen Substanzen zu besprühen, eine durchlöcherte Stange umfasst.

## Revendications

1. Machine pour le traitement de terrains agricoles par sprayage et incorporation au terrain de substances liquides telles que produits de protection pour les plantes, désherbants, engrais, conditionneurs de sol, du type comprenant :
• un premier dispositif (3) conçu pour sprayer ledit terrain avec lesdites substances liquides;
• un deuxième dispositif (8) conçu pour labourer le terrain et le mélanger auxdites substances liquides sprayées;
• un troisième dispositif (5) conçu pour compacter ledit terrain sprayé, de façon à former une croûte compacte empêchant l'évaporation des fumées engendrées par l'évaporation desdites substances liquides sprayées au moyen dudit premier dispositif (3) ;
où :
• ledit deuxième dispositif (8), conçu pour labourer ledit terrain et le mélanger auxdites substances liquides sprayées, comprend une machine pour enterrer les pierres;
• ledit premier dispositif (3), conçu pour sprayer ledit terrain avec lesdites substances liquides, se situe en aval dudit second dispositif (8) conçu pour labourer le terrain et le mélanger auxdites substances liquides sprayées, et vaporise directement le sol préalablement labouré ;
le terrain labouré, projeté par la lame, commence à se mélanger avec le produit sprayé au moment même où ledit produit sort dudit premier dispositif (3) conçu pour sprayer ledit terrain avec lesdites substances liquides.

2. Machine telle que revendiquée dans la revendication 1, **caractérisée en ce que** ledit premier dispositif (3) conçu pour sprayer le terrain avec lesdites substances liquides, se situe entre ledit deuxième dispositif (8), conçu pour labourer le terrain, et une grille postérieure (12) contre laquelle ledit terrain labouré est projeté.

3. Machine telle que revendiquée dans la revendication 1, **caractérisée en ce que** ledit premier dispositif (3), conçu pour sprayer le terrain avec lesdites substances liquides, se situe en aval dudit deuxième dispositif (8), conçu pour labourer ledit terrain et le mélanger auxdites substances liquides sprayées, dans le flux de pierres et de blocs d'argile du terrain passés au crible au travers d'une grille (12) située en aval dudit dispositif (8)

4. Machine telle que revendiquée dans la revendication 3, **caractérisée en ce que** ledit premier dispositif (3), conçu pour sprayer le terrain avec lesdites substances liquides, se situe en hauteur entre la base (28) d'un sillon (27) creusé par ledit deuxième dispositif (8), conçu pour labourer le terrain et le mélanger auxdites substances liquides sprayées, et le terrain non traité, lorsque ladite machine (1) est en position d'opérer.

5. Machine telle que revendiquée dans la revendication 4, **caractérisée en ce que** ledit premier dispositif (3), conçu pour sprayer le terrain avec lesdites substances liquides, se situe entre 50 et 80 mm de distance de la base (28) dudit sillon (27).

6. Machine telle que revendiquée dans la revendication 4, **caractérisée en ce que** ledit premier dispositif (3), conçu pour sprayer le terrain avec lesdites substances liquides, se situe à environ 50 mm de distance de la trajectoire externe des outils dudit deuxième dispositif (8), conçu pour labourer ledit terrain et le mélanger auxdites substances liquides sprayées.

7. Machine telle que revendiquée dans le revendications 2 à 4, **caractérisée en ce que** ledit premier dispositif (3), conçu pour sprayer le terrain avec lesdites substances liquides, se situe à l'intérieur d'un carénage (16a) conçu pour le protéger des pierres et des blocs de terrain projetés.

8. Machine telle que revendiquée dans au moins un des revendications 1 à 7, **caractérisée en ce que** ledit premier dispositif (3), conçu pour sprayer le terrain avec lesdites substances liquides, comprend de nombreux gicleurs (15).

9. Machine telle que revendiquée dans au moins un des revendications 1 à 7, **caractérisée en ce que** ledit premier dispositif (3), conçu pour sprayer le terrain avec lesdites substances liquides, comprend une barre perforée.
